# EUROPEAN PATENT APPLICATION

(11) **EP 4 654 224 A2**
(43) Date of publication of application: **26.11.2025**
(21) Application number: 25169051.7
(22) Date of filing: 08.04.2025
(51) Int. Cl.: H01B 7/02, H01B 7/18, H02G 1/00, H01B 3/08

(54) **INSULATED WIRES AND METHODS, AND APPARATUSES FOR FABRICATING INSULATED WIRE SEGMENTS**

(30) Priority: 22.05.2024 US 202418670898
(71) Applicant: The Boeing Company, Arlington, VA 22202 (US)
(72) Inventor: DUSTIN, Ashley M., Arlington, 22202 (US); KLEIN, Shirell E., Arlington, 22202 (US)
(74) Representative: Boult Wade Tennant LLP

(57) **Abstract**

An insulated wire includes a core body comprising electrically-conductive material. The insulated wire also includes a permanent coating comprising electrically-insulating material and disposed on the core body to electrically insulate the core body. The insulated wire further includes a removable coating disposed on the permanent coating to provide the core body and the permanent coating with structural support during cutting of the core body and the permanent coating to the desired length.

## Description

### FIELD

The present disclosure generally relates to wire fabrication, more particularly, to insulated wires, and methods and apparatuses for fabricating insulated wire segments.

### BACKGROUND

A typical insulated wire is made of conductive core material that is coated with an electrically-insulating material, such as glass or various electrically-insulated polymers. The coating of electrically-insulating material provides the wire with electrical-insulating properties. The coating of electrically-insulating material also provides some degree of electrical shielding for the conductive core material.

Electrically-insulated wires are not commercially available at desired micro-length scales. Existing methods for cutting insulated wires at micro-length scales include using high-power lasers or electrical discharge machines, which are expensive and difficult to scale to a desired micro-length. Mechanical cutting methods have also been used to cut insulated wires into microwires at desired micro-length scales. Existing mechanical cutting methods have resulted in defects of a microwire that has been cut to a desired micro-length, especially for a microwire made of a conductive core material that is coated with glass. The glass typically fractures, extensively cracks, or completely breaks off of the conductive core material.

Despite advances already made, those skilled in the art continue with research and development efforts in the field of fabricating wires including cutting insulated wires into microwires at desired micro-length scales.

### SUMMARY

Disclosed are insulated wires that are cuttable to a desired length.

In one example, the disclosed insulated wire includes a core body comprising electrically-conductive material. The insulated wire also includes a permanent coating comprising electrically-insulating material and disposed on the core body to electrically insulate the core body. The insulated wire further includes a removable coating disposed on the permanent coating to provide the core body and the permanent coating with structural support during cutting of the core body and the permanent coating to the desired length.

Also disclosed are insulated wire segment fabricating methods.

In one example, the disclosed fabricating method includes applying a removable coating material to a length of insulated wire to yield a coated length of the insulated wire. The method also includes cutting the coated length of the insulated wire to a desired length to yield a coated insulated wire segment. The method further includes optionally removing the removable coating material from the coated insulated wire segment.

In another example, the disclosed fabrication method includes cutting a length of an insulated wire to a desired length of the insulated wire segment using at least a pair of a plurality of cutting blades that are spaced apart from each other by the desired length or about the desired length.

Also disclosed are apparatuses for fabricating insulated wire segments to a desired length.

In one example, the disclosed fabricating apparatus includes a blade assembly comprising between 10 cutting blades and 1000 cutting blades, or between about 10 cutting blades and about 1000 cutting blades. The cutting blades are spaced apart from each other by the desired length or about the desired length. The blade assembly can be operated either manually or automatically so that the cutting blades can cut insulated wires into insulated wire segments.

Other examples of the disclosed insulated wires, fabricating methods, and fabricating apparatuses will become apparent from the following detailed description, the accompanying drawings and the appended claims.

### BRIEF DESCRIPTION OF THE DRAWINGS

Fig. 1 is a perspective view of an insulated wire constructed in accordance with an example.
Fig. 2A is an elevational view of a fabricating apparatus for cutting the insulated wire of Fig. 1, and constructed in accordance with an example.
Fig. 2B is an elevational view, looking approximately in the direction of arrow 2B in Fig. 2A.
Fig. 3 is a perspective view of an insulated wire segment that has been fabricated in accordance with an example.
Fig. 3A is an elevational view, looking approximately in the direction of arrow 3A in Fig. 3, and showing dimensions and layers of the insulated wire segment.
Fig. 3B is an elevational view, looking approximately in the direction of arrow 3B in Fig. 3, and showing dimensions of the insulated wire segment.
Fig. 4 is a flow diagram depicting a method for fabricating the insulated wire segment of Fig. 3 from the insulated wire of Fig. 1 in accordance with an example.
Fig. 5 is a flow diagram depicting a method for fabricating an insulated wire segment of Fig. 3 from the insulated wire of Fig. 1 in accordance with another example.
Fig. 6 is a block diagram of aircraft production and service methodology.
Fig. 7 is a schematic illustration of an aircraft.

### DETAILED DESCRIPTION

The present application is directed to insulated wires, and methods and apparatuses for fabricating an insulated wire segment. The specific construction of the insulated wire, fabricating method, fabricating apparatus, and the industry in which the insulated wire, fabricating method, and fabricating apparatus are implemented may vary. It is to be understood that the disclosure below provides a number of examples for implementing different features of various examples. Specific examples of components and arrangements are described to simplify the present disclosure. These are merely examples and are not intended to be limiting.

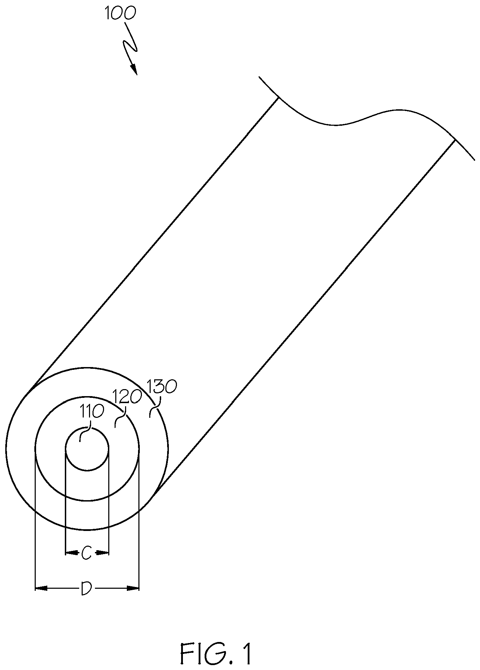

Referring to Fig. 1, a perspective view of an insulated wire 100 constructed in accordance with an example is illustrated. The insulated wire 100 includes a core body 110 comprising electrically-conductive material. The electrically-conductive material of the core body 110 comprises a metallic material. The metallic material may comprise at least one of nickel, iron, carbon, copper, cobalt, chromium, permalloy, and stainless steel. Other types of conductive material are possible. The core body 110 has a diameter "C" between 1 micrometer and 50 micrometers, or between about 1 micrometer and about 50 micrometers. Other dimensions of the diameter of the core body 110 are possible.

The insulated wire 100 also includes a permanent coating 120 comprising electrically-insulating material and disposed on the core body 110 to electrically insulate the core body 110. The permanent coating 120 comprises glass, for example. Other electrically-insulating materials are possible, such as an electrically-insulated polymer. The core body 110 and the permanent coating 120 together have a total diameter "D" between 5 micrometers and 500 micrometers, or between about 5 micrometers and 500 micrometers.

The insulated wire 100 further includes a removable coating 130 disposed on the permanent coating 120. The removable coating 130 may comprise a polymer material, such as at least one of a thermoplastic material and a thermoset material. The electrically-insulating polymer material of the removable coating 130 may be a coating with a dielectric constant greater than one measured in compliance with ASTM D149. In some, non-limiting examples, the removable coating 130 may comprise Crystal Bond 509 commercially available from SPI Supplies located in West Chester, PA. Other types of electrically-insulating polymer materials are possible.

When the removable coating 130 comprises a thermoplastic material, the thermoplastic material is removable by at least one of dissolution in a solvent, melting, and burning (i.e., pyrolysis). The thermoplastic material may be removed by dissolution in a solvent, such as a solvent that comprises at least one of a ketone, an alcohol, water, and a halogen. Other ways of removing thermoplastic material are possible. The removable coating 130 may be on one wire and/or a bundle of wires and/or an array of wires. It is conceivable that a pattern of wires could be arranged in the removable coating 130.

When the removable coating 130 comprises a thermoset material, the thermoset material is removable by burning. Other ways of removing thermoset materials are also contemplated.

Other types of material of the removable coating 130 are possible. In some examples, the removable coating 130 may comprise at least one of acrylic, polyurethane, epoxy, polysiloxane, polyurea, polyether, and polyester.

In some examples, the insulated wire 100 is cuttable to a desired length. The desired length of an insulated wire segment (i.e., a segment of the insulated wire 100 that has been cut to the desired length) is on a microscale level, such as between 10 micrometers and 500 micrometers, or between about 10 micrometers and 500 micrometers. Notably, the removable coating 130 provides the core body 110 and the permanent coating 120 with structural support during cutting of the core body 110 and the permanent coating 120 to the desired length, as will be described herein.

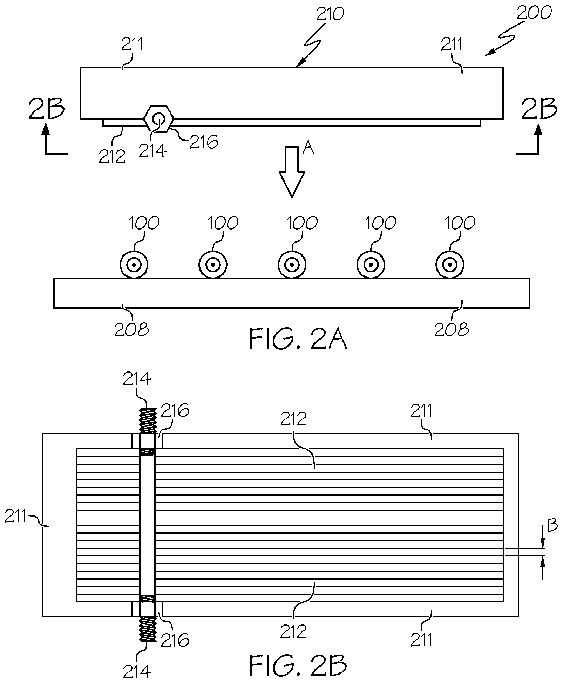

Referring to Fig. 2A, an elevational view of a fabricating apparatus 200 for cutting the insulated wire 100 of Fig. 1 is illustrated. The fabricating apparatus 200 is constructed in accordance with an example. Fig. 2B is an elevational view looking approximately in the direction of arrow "2B" in Fig. 2A.

As shown in Fig. 2A, the fabricating apparatus 200 is ready to cut the insulated wire 100 (five insulated wires shown in Fig. 2A). Each of the five insulated wires 100 is supported on a cutting board/surface (e.g., anvil) 208. Each of the five insulated wires 100 is shown enlarged in Fig. 2A for purpose of illustration. Although five insulated wires are shown ready to be cut, those skilled in the art will appreciate that fewer than five insulated wires or more than five insulated wires (e.g., 100 or more; 1000 or more; etc.) may be cut at a time, depending on the size and configuration of the fabricating apparatus 200.

The fabricating apparatus 200 includes a blade assembly 210 that can be pressed vertically downward in the direction of arrow "A" shown in Fig. 2A to cut the insulated wires 100. The blade assembly 210 includes a blade holding member 211 to which an array of blades 212 is secured. In some, non-limiting examples, the array of blades 212 may be interconnected using a common pin 214 extending through a corresponding opening in each blade 212 of the array of blades 212 and then secured with mechanical fasteners (e.g., nuts) 216, as best shown in Fig. 2B. The interconnected array of blades 212 may then be secured to the blade holding member 211 by heating the blades to partially melt an adjacent portion of the blade holding member 211, thereby melt-bonding the interconnected array of blades 212 to the blade holding member 211. In some other non-limiting examples, an adhesive may be used to secure the blades 212 (e.g., an interconnected array of blades 212) to the blade holding member 211. As shown in Fig. 2B, spacing "B" between adjacent blades is shown exaggerated for purpose of illustration.

The blade holding member 211 may be 3D-printed, and acts as a blade holder for the blades 212 to ensure that the blades 212 are spaced properly. The dull edges of the blades 212 go into the blade holding member 211, and are secured to the blade holding member 211 by melt-bonding, adhesive bonding, mechanically or the like. The sharp edges of the blades 212 face outward from the blade holding member 211 and are ready to cut wires.

The array of blades 212 of the blade assembly 210 may comprise any plurality of cutting blades, such as between 10 cutting blades and 1000 cutting blades, or between about 10 cutting blades and about 1000 cutting blades, that are spaced apart from each other by a desired length or about a desired length. The blades 212 are precisely spaced apart from each other between 100 micrometers and 500 micrometers, or between about 100 micrometers and about 500 micrometers. As a typical example, the blades 212 are spaced apart from each other by 250 micrometers or about 250 micrometers. The length of the blades 212 are orthogonal to the length of the wires to be cut.

The blades 212 are capable of cutting at any rate, such as making between 100 cuts per second and 10,000,000 cuts per second, or between about 100 cuts per second and about 10,000,000 cuts per second. The cutting rate depends upon the number of insulated wires placed beneath the blade holding member 211 to be cut, the number of blades 212 in the blade assembly 210, and whether the blade assembly 210 (i.e., a mechanical device) is compressed, compacted, squeezed, or constricted manually or automatically against the cutting board/surface 208 to cut insulated wires (e.g., the insulated wire 100 shown in Fig. 1) into insulated wire segments (as will be described hereinbelow). The blade assembly 210 may be manually operated by hand or be connected to either a motor or robot (not shown) to be automatically operated. When operated, the blades 212 simultaneously cut insulated wires like a guillotine.

Although the above description describes the blade assembly 210 being pressed vertically downward in the direction of arrow "A" shown in Fig. 2A against the cutting board/surface 208 to cut the insulated wires 100, it is conceivable that the blade assembly 210 be pressed in any direction depending upon the spatial relationship between the blade assembly 210 and the cutting board/surface 208.

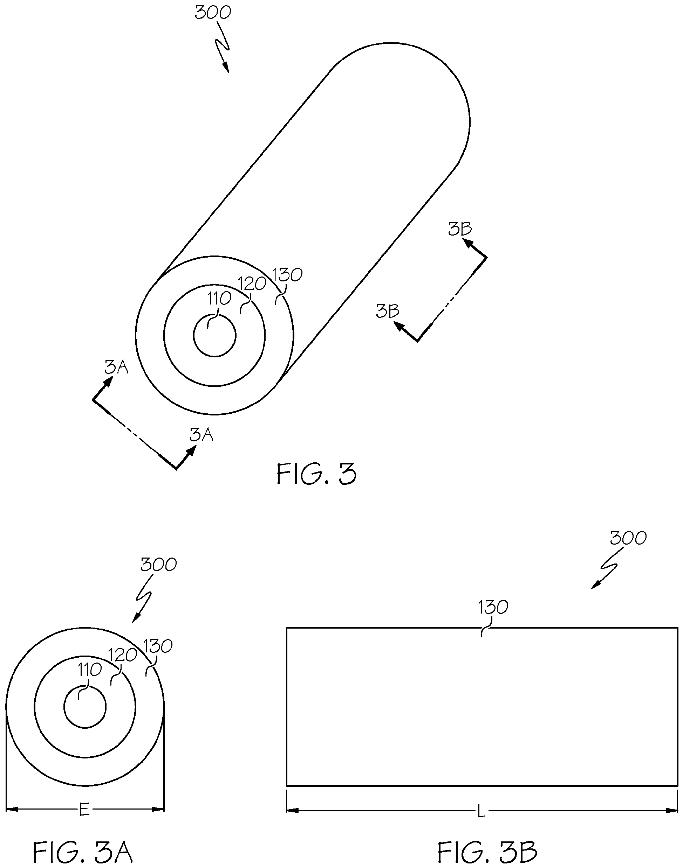

Referring to Fig. 3, a perspective view of an insulated wire segment 300 that has been fabricated in accordance with an example is illustrated. Fig. 3A is an elevational view looking approximately in the direction of arrow "3A" in Fig. 3. Fig. 3A shows dimensions and layers of the insulated wire segment 300. Fig. 3B is an elevational view looking approximately in the direction of arrow "3B" in Fig. 3. Fig. 3B shows dimensions of the insulated wire segment 300.

The insulated wire segment 300 shown in Figs. 3, 3A, and 3B is the result of using a fabricating apparatus (e.g., the fabricating apparatus 200 shown in Figs. 2A and 2B) to cut an insulated wire (e.g., the insulated wire 100 shown in Fig. 1) to a desired length. As shown in Figs. 3, 3A, and 3B, the insulated wire segment 300 includes three layers comprising the core body 110, the permanent coating 120, and the removable coating 130. The core body 110, the permanent coating 120, and the removable coating 130 together have a total diameter "E" between 20 micrometers and 150 micrometers, or between about 20 micrometers and about 150 micrometers. Other diameters are possible. The length "L" of the insulated wire segments 300 is between 100 micrometers and 500 micrometers, or between about 100 micrometers and about 500 micrometers. Other lengths are possible.

A number of advantages result from providing the insulated wire 100 of Fig. 1. One advantage is that the removable coating 130 of the insulated wire 100 acts as a protective casing and provides structural support during cutting of the core body 110 and the permanent coating 120 to the desired length. This is especially advantageous when the permanent coating 120 comprises glass, which can easily fracture, crack, or break away from the core body 110 when cut. The result is improved production output of insulated wire segments, and reduced production costs associated with making insulated wire segments from the insulated wire 100.

Another advantage is that the removable coating 130 can be left remaining as part of the insulated wire segment 300, or removed if desired. When the removable coating 130 is left remaining as part of the insulated wire segment 300, the removable coating 130 provides added electrical insulation. Moreover, if a pattern of wires were arranged in the removable coating 130, even more electrical insulation would be provided.

Yet another advantage is that a high throughput rate of making insulated wire segments to a desired length can be achieved using the fabricating apparatus 200 of Fig. 2, especially when the blade assembly 210 of the fabricating apparatus 200 is automatically controlled using either a motor or a robot.

Still another advantage of providing the insulated wire 100 of Fig. 1 is that expensive machines currently used to cut insulated wires into insulated wire segments at desired microscale lengths are no longer needed. The fabricating apparatus 200 of Fig. 2 is instead used in place of the expensive machines currently used. Moreover, the long setup times associated with the expensive machines currently used are no longer required. The result is cost savings in both not needing the expensive machines and not needing the labor to operate these expensive machines.

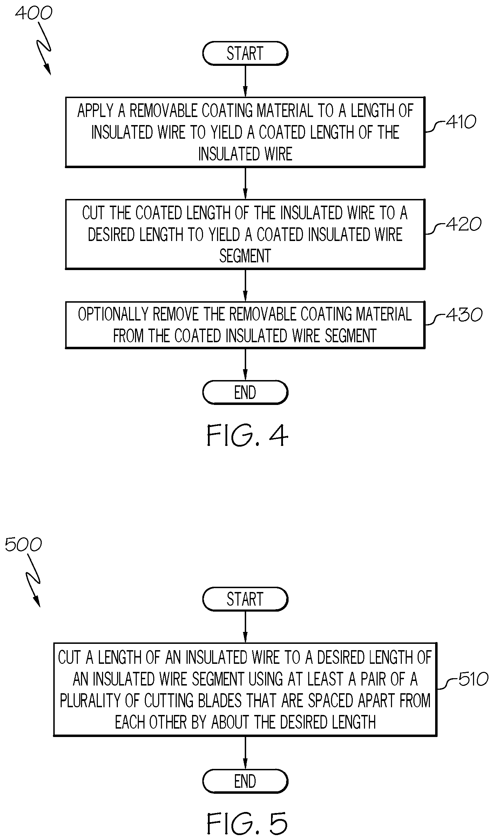

Referring to Fig. 4, a flow diagram 400 depicts a method for fabricating the insulated wire segment 300 of Fig. 3 from the insulated wire 100 of Fig. 1 in accordance with an example. In block 410, a removable coating material is applied to a length of insulated wire to yield a coated length of the insulated wire. The process proceeds to block 420 in which the coated length of the insulated wire is cut to a desired length to yield a coated insulated wire segment. Then in block 430, the removable coating material is optionally removed from the coated insulated wire segment. The process then ends.

In some examples, a mechanical device is compressed by a select one of a motor, a robot, and a hand to cut the coated length of the insulated wire to the desired length.

In some examples, between 10 cutting blades and 1000 cutting blades, or between about 10 cutting blades and about 1000 cutting blades, are used to cut the coated length of the insulated wire to the desired length.

In some examples, between 100 cuts per second to 10,000,000 cuts per second, or between about 100 cuts per second to about 10,000,000 cuts per second are made.

Referring to Fig. 5, a flow diagram 500 depicts a method for fabricating the insulated wire segment 300 of Fig. 3 from the insulated wire 100 of Fig. 1 in accordance with another example. In block 510, a length of an insulated wire is cut to a desired length of an insulated wire segment using at least a pair of a plurality of cutting blades that are spaced apart from each other by the desired length or about the desired length. The process then ends.

In some examples, a length of a wire insulated with glass is cut to the desired length. The desired length is between 10 micrometers and 500 micrometers , or between about 10 micrometers and about 500 micrometers.

In some examples, a mechanical device is compressed by a select one of a motor, a robot, and a hand to cut the insulated wire to the desired length.

In some examples, between 10 cutting blades and 1000 cutting blades, or between about 10 cutting blades and about 1000 cutting blades, are cut using a select one of a motor, a robot, and a hand to cut the insulated wire into a plurality of insulated wire segments.

In some examples, between 100 cuts per second to 10,000,000 cuts per second, or between about 100 cuts per second to about 10,000,000 cuts per second, are made.

It should be apparent from the above description that the removable coating 130 (Figs. 1 and 3) may be part of an applique or spray-on coating in an aerospace environment. Insulated wire segments, such as the insulated wire segment 300 shown in Fig. 3, may be used in the fabrication of an applique or spray-on coating. The insulated wire segment 300 may be used in many different applications in an aerospace environment.

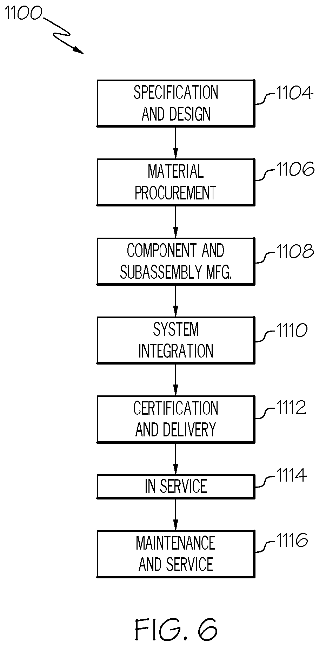

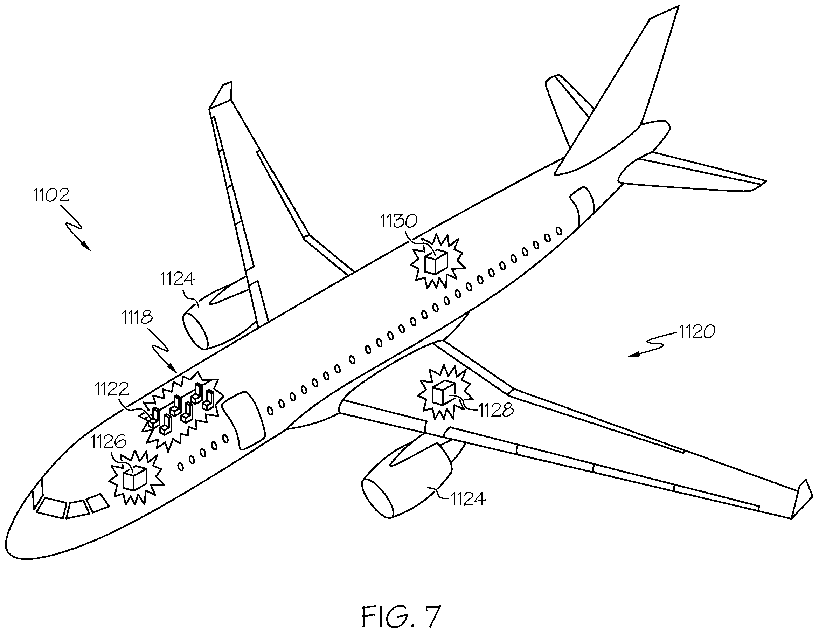

Examples of the disclosure may be described in the context of an aircraft manufacturing and service method 1100, as shown in Fig. 6, and an aircraft 1102, as shown in Fig. 7. During pre-production, the aircraft manufacturing and service method 1100 may include specification and design 1104 of the aircraft 1102 and material procurement 1106. During production, component/subassembly manufacturing 1108 and system integration 1110 of the aircraft 1102 takes place. Thereafter, the aircraft 1102 may go through certification and delivery 1112 in order to be placed in service 1114. While in service by a customer, the aircraft 1102 is scheduled for routine maintenance and service 1116, which may also include modification, reconfiguration, refurbishment and the like.

Each of the processes of method 1100 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in Fig. 7, the aircraft 1102 produced by example method 1100 may include an airframe 1118 with a plurality of systems 1120 and an interior 1122. Examples of the plurality of systems 1120 may include one or more of a propulsion system 1124, an electrical system 1126, a hydraulic system 1128, and an environmental system 1130. Any number of other systems may be included.

The disclosed insulated wire, fabricating apparatus, and fabricating method may be employed during any one or more of the stages of the aircraft manufacturing and service method 1100. In some examples, components or subassemblies corresponding to component/subassembly manufacturing 1108, system integration 1110, and/or maintenance and service 1116 may be assembled using the disclosed insulated wire, apparatus and method. In some other examples, the airframe 1118 may be constructed using the disclosed insulated wire, materials and/or coatings which include the insulated wire, apparatus and method. Also, one or more insulated wire examples, apparatus examples, method examples, or a combination thereof may be utilized during component/subassembly manufacturing 1108 and/or system integration 1110, for example, by substantially expediting assembly of or reducing the cost of an aircraft 1102, such as the airframe 1118 and/or the interior 1122. Similarly, one or more insulated wire examples, apparatus examples, method examples, or a combination thereof may be utilized while the aircraft 1102 is in service, for example and without limitation, to maintenance and service 1116.

Different examples of the insulated wires, and apparatus and methods disclosed herein include a variety of components, features, and functionalities. It should be understood that the various examples of the insulated wire, apparatus and method disclosed herein may include any of the components, features, and functionalities of any of the other examples of the insulated wire, apparatus and method disclosed herein in any combination, and all of such possibilities are intended to be within the scope of the present disclosure.

The above-described insulated wire, apparatus and method are described in the context of an aircraft. However, one of ordinary skill in the art will readily recognize that the disclosed insulated wire, apparatus and method are suitable for a variety of applications, and the present disclosure is not limited to aerospace applications. For example, the disclosed insulated wire, apparatus and method may be implemented in various types of vehicles including, for example, helicopters, passenger ships, automobiles, marine products (boat, motors, etc.) and the like. Non-vehicle applications are also contemplated.

Although the above-description describes an insulated wire, an apparatus for fabricating an insulated wire segment, and a fabricating method for an insulated wire segment in an aerospace environment, it is contemplated that the insulated wire, fabricating apparatus, and fabricating method may be implemented in any industry in accordance with the applicable industry standards. The specific insulated wire, fabricating apparatus, and fabricating method can be selected and tailored depending upon the particular application.

Further, although various examples have been shown and described, modifications may occur to those skilled in the art upon reading the specification. The present application includes such modifications and is limited only by the scope of the claims.

The following clauses present further examples:
Clause 1. An insulated wire (100) cuttable to a desired length, the insulated wire (100) comprising:
   a core body (110) comprising electrically-conductive material;
   a permanent coating (120) comprising electrically-insulating material and disposed on the core body (110) to electrically insulate the core body (110); and
   a removable coating (130) disposed on the permanent coating (120) to provide the core body (110) and the permanent coating with structural support during cutting of the core body (110) and the permanent coating (120) to the desired length.
Clause 2. The insulated wire (100) of Clause 1 wherein the electrically-conductive material of the core body (110) comprises a metallic material.
Clause 3. The insulated wire (100) of Clause 2 wherein the metallic material comprises at least one of nickel, iron, carbon, copper, cobalt, chromium, permalloy, and stainless steel.
Clause 4. The insulated wire (100) of any preceding Clause wherein the core body (110) has a diameter between1 micrometer and 50 micrometers or between about 1 micrometer and about 50 micrometers.
Clause 5. The insulated wire (100) of any preceding Clause wherein the permanent coating (120) comprises glass.
Clause 6. The insulated wire (100) of any preceding Clause wherein the core body (110) and the permanent coating (120) together have a total diameter between 5 micrometers and 500 micrometers, or between about 5 micrometers and about 500 micrometers.
Clause 7. The insulated wire (100) of any preceding Clause wherein the removable coating (130) comprises at least one of a thermoplastic material and a thermoset material.
Clause 8. The insulated wire (100) of any preceding Clause wherein the removable coating (130) comprises a thermoplastic material, and wherein the thermoplastic material is removable by at least one of dissolution in a solvent, melting, and burning.
Clause 9. The insulated wire (100) of Clause 8 wherein the thermoplastic material is removable by dissolution in the solvent, and wherein the solvent comprises at least one of a ketone, an alcohol, water, and a halogen.
Clause 10. The insulated wire (100) of any preceding Clause wherein the removable coating (130) comprises a thermoset material, and wherein the thermoset material is removable by burning.
Clause 11. The insulated wire (100) of any preceding Clause wherein the removable coating (130) comprises at least one of acrylic, polyurethane, epoxy, polysiloxane, polyurea, polyether, and polyester.
Clause 12. The insulated wire (100) of any preceding Clause wherein the desired length is between 10 micrometers and 500 micrometers, or between about 10 micrometers and about 500 micrometers.
Clause 13. A method (400) for fabricating an insulated wire segment (300), the method (400) comprising:
   applying (410) a removable coating (130) material to a length of insulated wire (110, 120) to yield a coated length of the insulated wire (100);
   cutting (420) the coated length of the insulated wire (100) to a desired length to yield a coated insulated wire segment (300); and
   optionally removing (430) the removable coating (130) material from the coated insulated wire segment (300).
Clause 14. The method of Clause 13 wherein the cutting the coated length of the insulated wire (100) comprises:
   compressing a mechanical device by a select one of a motor, a robot, and a hand to cut the coated length of the insulated wire (100) to the desired length.
Clause 15. The method of Clause 13 wherein the cutting the coated length of the insulated wire (100) comprises:
   cutting using between 10 cutting blades (212) and 1000 cutting blades (212), or between about 10 cutting blades (212) and about 1000 cutting blades (212), to cut the coated length of the insulated wire (100) to the desired length.
Clause 16. The method of Claim 13 wherein the cutting the coated length of the insulated wire (100) comprises:
   making between 100 cuts per second to 10,000,000 cuts per second, or between about 100 cuts per second to about 10,000,000 cuts per second.
Clause 17. A method (500) for fabricating an insulated wire segment (300), the method (500) comprising:
   cutting (510) a length of an insulated wire (100) to a desired length of the insulated wire segment (300) using at least a pair of a plurality of cutting blades (212) that are spaced apart from each other by the desired length or about the desired length.
Clause 18. The method of Clause 17 wherein the cutting the length of the insulated wire (100) to the desired length comprises:
   cutting a length of a wire (110) insulated with glass (120) to the desired length, the desired length being between 10 micrometers and 500 micrometers, or between about 10 micrometers and about 500 micrometers.
Clause 19. The method of Clause 17 wherein the cutting the length of the insulated wire (100) to the desired length comprises:
   compressing a mechanical device by a select one of a motor, a robot, and a hand to cut the insulated wire (100) to the desired length.
Clause 20. The method of Clause 17 wherein the cutting the length of the insulated wire (100) to the desired length comprises:
   cutting using between 10 cutting blades (212) and 1000 cutting blades (212), or between about 10 cutting blades (212) and about 1000 cutting blades (212), by a select one of a motor, a robot, and a hand to cut the insulated wire (100) into a plurality of insulated wire segments (300). Clause 21. The method of Clause 17 wherein the cutting the length of the insulated wire (100) to the desired length comprises:
   making between 100 cuts per second to 10,000,000 cuts per second, or between about 100 cuts per second to about 10,000,000 cuts per second.

## Claims

1. An insulated wire (100) cuttable to a desired length, the insulated wire (100) comprising:
a core body (110) comprising electrically-conductive material;
a permanent coating (120) comprising electrically-insulating material and disposed on the core body (110) to electrically insulate the core body (110); and
a removable coating (130) disposed on the permanent coating (120) to provide the core body (110) and the permanent coating with structural support during cutting of the core body (110) and the permanent coating (120) to the desired length.

2. The insulated wire (100) of Claim 1 wherein the electrically-conductive material of the core body (110) comprises a metallic material, and optionally, wherein the metallic material comprises at least one of nickel, iron, carbon, copper, cobalt, chromium, permalloy, and stainless steel.

3. The insulated wire (100) of any preceding Claim wherein one or more of:
the core body (110) has a diameter between 1 micrometer and 50 micrometers, or between about 1 micrometer and about 50 micrometers; and
the core body (110) and the permanent coating (120) together have a total diameter between 5 micrometers and 500 micrometers, or between about 5 micrometers and about 500 micrometers.

4. The insulated wire (100) of any preceding Claim wherein the permanent coating (120) comprises glass.

5. The insulated wire (100) of any preceding Claim wherein the removable coating (130) comprises at least one of a thermoplastic material and a thermoset material.

6. The insulated wire (100) of any preceding Claim wherein the removable coating (130) comprises a thermoplastic material, and wherein the thermoplastic material is removable by at least one of dissolution in a solvent, melting, and burning, and optionally,
wherein the thermoplastic material is removable by dissolution in the solvent, and wherein the solvent comprises at least one of a ketone, an alcohol, water, and a halogen.

7. The insulated wire (100) of any preceding Claim wherein the removable coating (130) comprises a thermoset material, and wherein the thermoset material is removable by burning.

8. The insulated wire (100) of any of Claims 1 - 4 wherein the removable coating (130) comprises at least one of acrylic, polyurethane, epoxy, polysiloxane, polyurea, polyether, and polyester.

9. The insulated wire (100) of any preceding Claim wherein the desired length is between 10 micrometers and 500 micrometers, or between about 10 micrometers and about 500 micrometers.

10. A method (400) for fabricating an insulated wire segment (300), the method (400) comprising:
applying (410) a removable coating (130) material to a length of insulated wire (110, 120) to yield a coated length of the insulated wire (100);
cutting (420) the coated length of the insulated wire (100) to a desired length to yield a coated insulated wire segment (300); and
optionally removing (430) the removable coating (130) material from the coated insulated wire segment (300).

11. The method (400) of Claim 10 wherein the cutting the coated length of the insulated wire (100) comprises:
compressing a mechanical device by a select one of a motor, a robot, and a hand to cut the coated length of the insulated wire (100) to the desired length.

12. The method (400) of Claim 10 wherein the cutting the coated length of the insulated wire (100) comprises:
cutting using between 10 cutting blades (212) and 1000 cutting blades (212), or between about 10 cutting blades (212) and about 1000 cutting blades (212), to cut the coated length of the insulated wire (100) to the desired length, and optionally,
wherein the cutting is by a select one of a motor, a robot, and a hand to cut the coated length of the insulated wire (100) to the desired length.

13. The method (400) of any one of Claims 10 - 12 wherein the cutting the coated length of the insulated wire (100) comprises:
making between 100 cuts per second to 10,000,000 cuts per second, or between about 100 cuts per second to about 10,000,000 cuts per second.

14. The method (400) of any one of Claims 10 - 13, wherein one of:
the removable coating (130) comprises a thermoplastic material, and wherein removing (430) the removable coating (130) material comprises removing the thermoplastic material by at least one of dissolution in a solvent, melting, and burning, and optionally, wherein the solvent comprises at least one of a ketone, an alcohol, water, and a halogen;
the removable coating (130) comprises a thermoset material, and wherein removing (430) the removable coating (130) material comprises removing the thermoset material by burning; and
the removable coating (130) comprises at least one of acrylic, polyurethane, epoxy, polysiloxane, polyurea, polyether, and polyester.

15. The method (400) of any one of Claims 10 - 14, wherein one or more of:
the insulated wire (110, 120) is insulated with glass; and
the desired length is between 10 micrometers and 500 micrometers, or between about 10 micrometers and about 500 micrometers.
